# EUROPEAN PATENT APPLICATION

(11) **EP 4 549 089 A1**
(43) Date of publication of application: **07.05.2025**
(21) Application number: 23809436.1
(22) Date of filing: 14.02.2023
(51) Int. Cl.: B24B 29/00

(54) **SURFACE TREATMENT MEMBER AND SURFACE TREATMENT SYSTEM**

(30) Priority: 30.06.2022 WO PCT/JP2022/026892
(71) Applicant: Japan Production & Sales Company LLC, Ina-shi, Nagano 396-0008 (JP)
(72) Inventor: YAMAZAKI, Koji, Seki-shi, Gifu 501-3821 (JP)
(74) Representative: Liesegang, Eva
(86) International application number: PCT/JP2023/006331
(87) International publication number: WO 2024/004268

(57) **Abstract**

Provided is a surface treatment member 1 used by being mounted on a rotary member in a surface treatment system including the rotary member. The surface treatment member 1 includes: a base 10; a striking member 40 having an annular body portion and a protruding portion that protrudes from the body portion; and a shaft member 50 disposed in a region on an inner side of the body portion. When the surface treatment member 1 is viewed along an imaginary axis A about which the base 10 is to be rotated, a portion of the striking member 40 is exposed outside an outer periphery of the base 10 by a centrifugal force when the surface treatment member 1 is rotated, and an entirety of the striking member 40 is retractable toward inside an imaginary circle that passes over an outermost periphery of the base 10 about the imaginary axis A after the striking member 40 impinges on a surface treatment object. According to the surface treatment member 1 of the present invention, by using the surface treatment member 1 in the surface treatment system that includes the rotary member, it is possible to increase the adhesiveness of a paint when the surface preparation is performed, and the surface preparation can be performed easily.

## Description

### Technical Field

The present invention relates to a surface treatment member and a surface treatment system.

### Background Art

In applying coating or painting to a construction material or the like, it is preferable to apply a surface preparation to a construction material surface before applying coating or painting. The surface preparation is the treatment that is performed for bringing a surface of a coating applying object into a state suitable for coating or painting. When coating is performed without performing the surface preparation, an adhering force of a paint is lowered due to the presence of a foreign material (a rust, an old coated film or the like) thus giving rise to a case where the coating applying object cannot be sufficiently protected. The surface preparation is also referred to as substrate treatment, cleaning or the like.

The surface preparation can be performed using a grinding tool that includes a disc-type or belt-type grinder (sander), for example (see patent literature 1, for example) . Further, the surface preparation can be performed using a rotary tool having an annular brush (see patent literature 2, for example). Further, the surface preparation can be also performed by a method that blasts particle-like materials to a treatment object (a blasting method) (see patent literature 3, for example).

### Citation List

### Patent Literature

PTL 1: JP-A-2007-307701
PTL 2: JP-A-2006-212772
PTL 3: JP-A-2005-111628

### Summary of Invention

### Technical Problem

However, when the surface preparation is performed using the conventional grinding tool or a rotary tool, a pattern having a scratch shape is formed on a surface treatment object. Accordingly, compared to the surface preparation performed by a blast method where concaves and convexes having a dot shape are formed on a surface treatment object, there arises a drawback that the adhesiveness of a paint is lowered. On the other hand, the surface preparation by the blast method has a drawback that a large-sized preparation is necessary in advance and a drawback that the surface preparation cannot be performed easily due to a reason that a large amount of waste is generated.

The present invention has been made to overcome the above-mentioned drawback, and it is an object of the present invention to provide a surface treatment system capable of increasing adhesiveness of a paint and capable of easily performing surface preparation, and a surface treatment member used in the surface treatment system.

### Solution to Problem

[1] A surface treatment member according to the present invention is a surface treatment member used by being mounted on a rotary member in a surface treatment system including the rotary member. The surface treatment member includes: a base being rotatably mountable on the rotary member; a striking member having an annular body portion and a protruding portion that protrudes from the body portion, the striking member configured to impinge on a surface treatment object and to impart an impact to the surface treatment object when using; and a shaft member disposed in a region on an inner side of the body portion, and being fixed to the base. When the surface treatment member is viewed along an imaginary axis about which the base is to be rotated, a portion of the striking member is configured to be exposed outside an outer periphery of the base by a centrifugal force when the surface treatment member is rotated, and an entirety of the striking member is retractable toward inside an imaginary circle that passes over an outermost periphery of the base about the imaginary axis after the striking member impinges on the surface treatment object.
[2] In the surface treatment member according to the present invention, it is preferable that, when the surface treatment member is viewed along the imaginary axis, the periphery of the base be formed in a circular shape about the imaginary axis, and an entirety of the striking member be retractable toward inside an outer periphery of the base after the striking member impinges on the surface treatment object.
[3] In the surface treatment member according to the present invention, it is preferable that the striking member include a plurality of the protruding portions, and the protruding portions be disposed at an equal interval on an outer periphery of the body portion.
[4] In the surface treatment member according to the present invention, it is preferable that an inner periphery of the body portion be formed in a regular polygonal shape that corresponds to the number of protruding portions.
[5] In the surface treatment member according to the present invention, it is preferable that, when the surface treatment member is viewed along the imaginary axis, the protruding portion be formed in an asymmetrical shape with respect to an imaginary line that connects a center of the body portion and a distal end of the protruding portion.
[6] A surface treatment system according to the present invention is s surface treatment system that includes: a rotary member that is rotatable by a drive means; and a surface treatment member that is mounted on the rotary member. The surface treatment member includes: a base being rotatably mountable on the rotary member; a striking member having an annular body portion and a protruding portion that protrudes from the body portion, the striking member configured to impinge on a surface treatment object and to impart an impact to the surface treatment object when using; and a shaft member disposed in a region on an inner side of the body portion, and being fixed to the base. When the surface treatment member is viewed along a rotary axis of the rotary member, a portion of the striking member is configured to be exposed outside of an outer periphery of the base by a centrifugal force when the surface treatment member is rotated, and an entirety of the striking member is retractable toward inside an imaginary circle that passes over an outermost periphery of the base about the imaginary axis after the striking member impinges on the surface treatment object.
[7] A surface treatment system according to the present invention is a surface treatment system that includes: a rotary member that is rotatable by a drive means; and a surface treatment member that is mounted on the rotary member. The surface treatment member includes: a base being rotatably mountable on the rotary member; a striking member having an annular body portion and a protruding portion that protrudes from the body portion, the striking member configured to impinge on a surface treatment object and to impart an impact to the surface treatment object when using; and a shaft member disposed in a region on an inner side of the body portion, and being fixed to the base. The surface treatment system further comprises a guide member that expands toward a surface treatment object side from the base when using. When the surface treatment member is viewed along a rotary axis of the rotary member, a portion of the striking member is configured to be exposed outside an outer periphery of the guide member by a centrifugal force when the surface treatment member is rotated, and an entirety of the striking member is retractable toward inside the outer periphery of the guide member after the striking member impinges on the surface treatment object.

### Advantageous effects of Invention

In the surface treatment member according to the present invention, the surface treatment member includes: the base being rotatably mountable on the rotary member; the striking member having the annular body portion and the protruding portion that protrudes from the body portion, the striking member configured to impinge on the surface treatment object and to impart an impact to the surface treatment object when using; and the shaft member disposed in the region on an inner side of the body portion, and being fixed to the base. When the surface treatment member is viewed along the imaginary axis about which the base is to be rotated, a portion of the striking member is configured to be exposed outside the outer periphery of the base by a centrifugal force when the surface treatment member is rotated, and the entirety of the striking member is retractable toward the inside the imaginary circle that passes over the outermost periphery of the base about the imaginary axis after the striking member impinges on the surface treatment object. With such a configuration, by performing the surface preparation by the surface treatment system that includes the surface treatment member according to the present invention, the striking member speedily retracts after impinging on the surface treatment object and hence, concaves and convexes having a dot shape are formed on the surface treatment object without forming patterns having a scratch shape. In this manner, according to the surface treatment member of the present invention, by using the surface treatment member as a part of the surface treatment system, it is possible to increase the adhesiveness of a paint when the surface preparation is performed. Further, according to the surface treatment member of the present invention, by using the surface treatment member as a part of the surface treatment system, the surface treatment system can be used with the same feeling as a conventional rotary tool and hence, the surface preparation can be performed easily.

The surface treatment systems according to the present invention includes the surface treatment member according to the present invention and hence, it is possible to provide the surface treatment system where the adhesiveness of a paint can be increased, and surface preparation can be performed easily.

Further, another surface treatment system according to the present invention is the surface treatment system that includes: the rotary member that is rotatable by the drive means; and the surface treatment member that is mounted on the rotary member. The surface treatment member includes: the base being rotatably mountable on the rotary member; the striking member having the annular body portion and the protruding portion that protrudes from the body portion, the striking member configured to impinge on the surface treatment object and to impart an impact to the surface treatment object when using; and the shaft member disposed in a region on an inner side of the body portion, and being fixed to the base. The surface treatment system further includes the guide member that expands toward the surface treatment object side from the base when using. When the surface treatment member is viewed along the rotary axis of the rotary member, a portion of the striking member is configured to be exposed outside the outer periphery of the guide member by a centrifugal force when the surface treatment member is rotated, and the entirety of the striking member is retractable to the inside the outer periphery of the guide member after the striking member impinges on the surface treatment object. With such a configuration, by performing the surface preparation by another surface treatment system according to the present invention, the striking member speedily retracts after impinging on the surface treatment object and hence, concaves and convexes having a dot shape are formed on the surface treatment object without forming patterns having a scratch shape. In this manner, according to another surface treatment system of the present invention, it is possible to increase the adhesiveness of a paint when the surface preparation is performed. Further, according to another surface treatment system of the present invention, the surface treatment system can be used with the same feeling as a conventional rotary tool and hence, the surface preparation can be performed easily.

### Brief Description of Drawings

Figs. 1A to 1D are views for illustrating a surface treatment member 1 according to an embodiment 1.
Fig. 2 is a front view of the surface treatment member 1 according to the embodiment 1 at the time of using (at the time of rotating) the surface treatment member 1.
Figs. 3A and 3B are views illustrating a striking member 40 in the embodiment 1.
Figs. 4A and 4B are views illustrating a surface treatment system 100 according to the embodiment 1.
Figs. 5A to 5C are views illustrating a surface treatment system 100 according to the embodiment 1.
Figs. 6A to 6D are views illustrating the behavior of the striking member 40 in the surface treatment system 100 according to the embodiment 1.
Figs. 7A to 7C are views illustrating a surface treatment system 102 according to the embodiment 1.
Figs. 8A to 8D are views illustrating the behavior of a striking member 40 in the surface treatment system 102 according to the embodiment 1.
Figs. 9A to 9D are views illustrating a surface treatment member 2 according to an embodiment 2.
Figs. 10A and 10B are views illustrating a surface treatment system 200 according to an embodiment 3.
Figs. 11A and 11B are views illustrating the surface treatment system 200 according to the embodiment 3.
Figs. 12A to 12D are views illustrating a surface treatment member 4 and a surface treatment system 300 according to an embodiment 4.
Figs. 13A to 13F are views illustrating a surface treatment member 5 according to a modification.

### Description of Embodiments

Hereinafter, the description is made with respect to a surface treatment member and a surface treatment system according to the present invention based on respective embodiments with reference to drawings. The respective drawings are schematic views, and do not always strictly reflect actual structures and configurations. The respective embodiments described hereinafter do not limit the present invention called for in claims. Further, it is not always the case where all of various components and the combinations of these components that are described in the respective embodiments are indispensable in the present invention. In the description made hereinafter, there may be a case where, with respect to constitutional elements that are considered substantially identical, the same symbols are used over the embodiments, and repetitious description of these constitutional elements is omitted.

### [Embodiment 1]

### 1. Surface treatment member 1

First, the surface treatment member 1 according to an embodiment 1 is described.

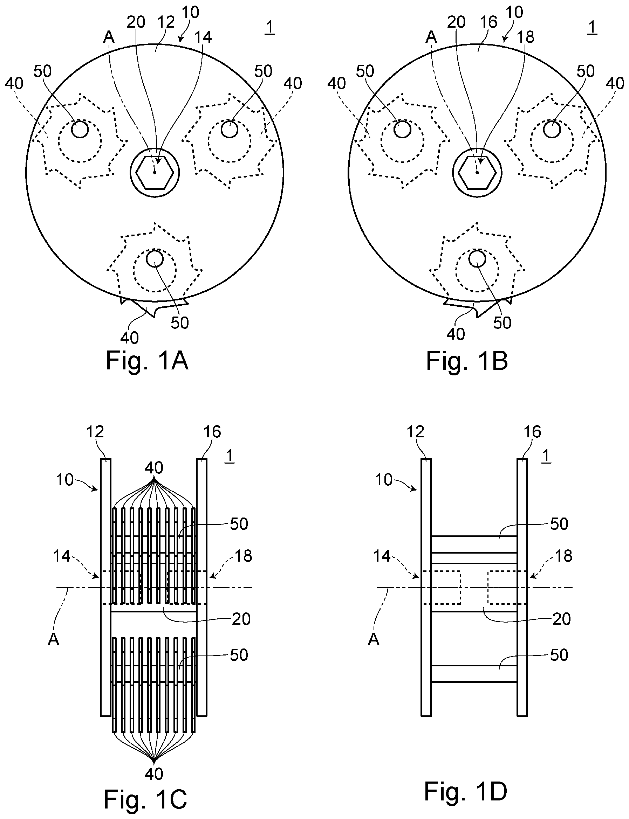

Figs. 1A to 1D are views illustrating the surface treatment member 1 according to the embodiment 1. Fig 1A is a front view of the surface treatment member 1 when the surface treatment member 1 is not used (in a stationary state), Fig. 1B is a rear view of the surface treatment member 1 illustrated in Fig. 1A, Fig. 1C is a right side view of the surface treatment member 1 illustrated in Fig. 1A, and Fig. 1D is a view illustrating the surface treatment member 1 in a state where a striking member 40 is removed from the surface treatment member 1 illustrated in Fig. 1C.

In Figs. 1A to 1D, the downward direction in the drawing is the direction of gravity. The same goes for the front view and the right side view described later.

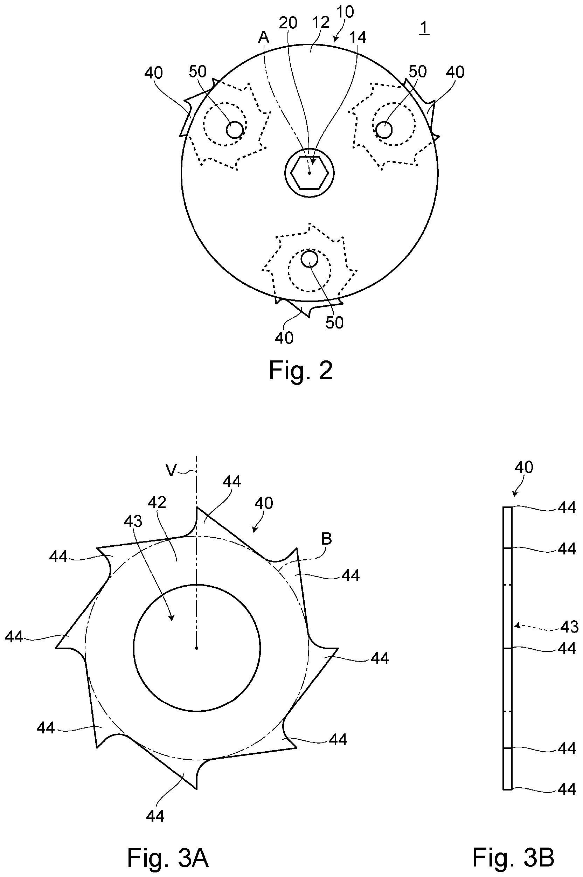

Fig. 2 is a front view of the surface treatment member 1 according to the embodiment 1 during a use time (during a rotation time).

Fig. 3 is a view illustrating the striking member 40 according to the embodiment 1. Fig. 3(a) is a front view of the striking member 40, and Fig.3 (b) is a right side view of the striking member 40 illustrated in Fig. 3(a). In Fig. 3, the striking member 40 is illustrated in an enlarged manner compared to Fig. 1 and Fig. 2.

The display directions and the names (the front view, the right side view and the like) in the drawings are provided for the sake of convenience, and these descriptions do not restrict the use direction and the like of the surface treatment member and the surface treatment system according to the present invention. In the respective drawings, there may be a case where a broken line is used to indicate the shape of a part or the entirety of a constitutional element that cannot be viewed directly.

The surface treatment member 1 is a type of surface treatment member where the surface treatment member 1 is mounted on a rotary member 110 is in a surface treatment system 100 (described later) that includes the rotary member 110. As illustrated in Fig. 1 and Fig. 2, the surface treatment member 1 includes a base 10, striking members 40, and shaft members 50.

The base 10 is a member that can be mounted on the rotary member 110. The base 10 includes a first circular member 12, a second circular member 16, and a shaft member 20. As viewed in Fig. 1 (a) and Fig. 1(b), the first circular member 12 and the second circular member 16 each are formed of a circular-disk-like member formed of a circular shape that has its center on an imaginary axis A around which the base 10 is rotated. The shaft member 20 is a rod-shaped member that is disposed along the imaginary axis A around which the base 10 is rotated, and connects the first circular member 12 and the second circular member 16. The base 10 may further include members other than these members (for example, members for fixing or joining the respective members). When the surface treatment member 1 is viewed along the imaginary axis A around which the base 10 is rotated (as viewed in Fig. 1(a) or Fig. 1(b)), an outer periphery of the base 10 forms a circular shape having its center on the imaginary axis A. Accordingly, in the embodiment 1, the shape of "an imaginary circle that has its center on the imaginary axis A and passes outermost periphery of the base 10" becomes equal to the outer periphery of the base 10.

In a side of the first circular member 12 of the base 10, a mounting hole 14 that corresponds to a mounting portion 12 described later of the rotary member 110 is formed (see Fig. 1(a)). Further, in a side of the second circular member 16 of the base 10, a mounting hole 18 that corresponds to a mounting portion 112 is formed in the same manner as the mounting hole 14 (see Fig. 1(b)).

The respective members that constitute the base 10 may be formed using a material containing metal, a resin, a rubber as a base material, for example. These members may be made of a single material, or may be made of a plurality of materials.

The striking member 40 is a member that impinges on a surface treatment object and imparts an impact on the surface treatment object when the surface treatment member 1 is used. As illustrated in Fig. 3, the striking member 40 has an annular body portion 42, and protruding portions 44 that protrude from the body portion 42. In Fig. 3, symbol B indicates a boundary line between the body portion 42 and the protruding portion 44. The boundary line B is provided for facilitating the understanding of the drawing, and does not imply the presence of a particular structure along the boundary line B.

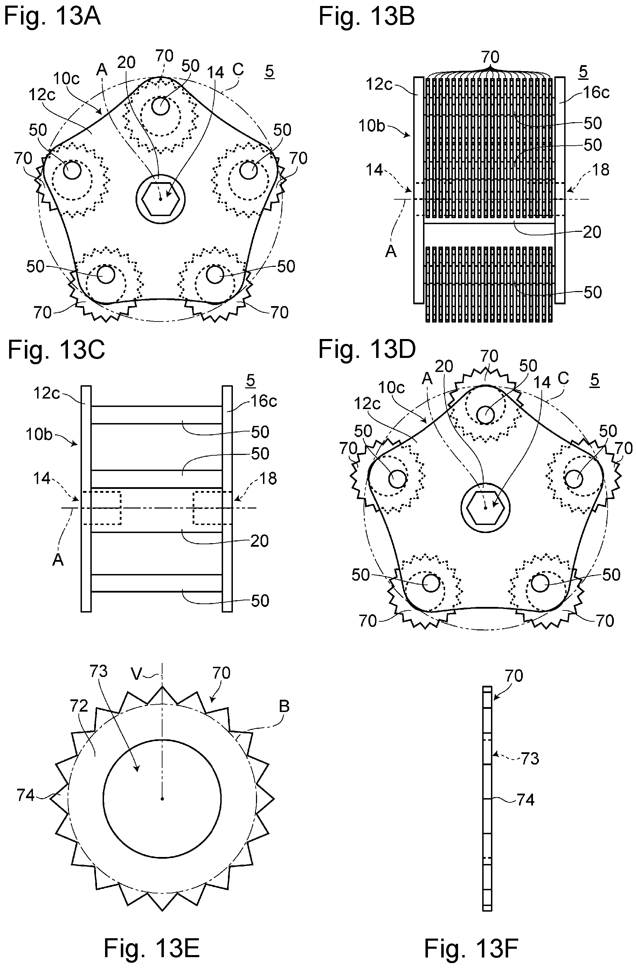

In the embodiment 1, ten pieces of striking members 40 are mounted along the direction that follows the imaginary axis A (see Fig. 1(c)). Further, these constitutional elements form one set, and the surface treatment member 1 includes three sets of these striking members 40. Such a configuration is provided for an exemplifying purpose, and the number of striking members 40 in a row or the number of sets of striking members 40 may be suitably set corresponding to a kind of a surface treatment object or the like (for example, see a modification described later and Fig. 13). The striking members 40 are respectively independently mounted. By arranging the striking members 40 in this manner, even in a case where concaves and convexes or curved surfaces are formed on a surface treatment object, it is possible to perform the surface preparation smoothly.

Next, the configuration of individual striking member 40 is described.

The body portion 42 has an annular shape. In this specification, "annular shape" includes not only a case where both of an outer peripheral shape and an inner peripheral shape have a strictly circular shape but also a case where at least one of the outer peripheral shape and the inner peripheral shape has an elliptical shape or a polygonal shape (for example, see an embodiment 2 described later). A region 43 on an inner side (through hole) is formed in the body portion 42. As viewed in Fig. 1(a), an inner periphery of the body portion 42 is formed of a circular shape having a larger diameter than the shaft member 50. It may be safe to say that the region 43 is formed of a circular shape having a larger diameter than a diameter of the shaft member 50. The above-mentioned relationship is established between the region 43 on an inner side and the shaft member 50 and hence, in a state where the shaft member 50 is disposed in the region 43 on an inner side of the striking member 40, the center of the striking member 40 is movable about the center of the shaft member 50.

The striking member 40 has a plurality of protruding portions 44. The protruding portions 44 are arranged at an equal interval on the outer periphery of the body portion 42 (see Fig. 3(a)). In the embodiment 1, eight protruding portions 44 are provided with respect to one striking member 40. The protruding portions 44 may be also expressed as portions that impinge on a surface treatment object when the surface treatment system 100 is used in an appropriate mode. It is preferable that a distal end of the protruding portion 44 be formed in an acute angle shape (less than 90°). By forming the protruding portions 44 in such a shape, the striking member 40 can form fine and deep recesses on the surface treatment object. A shortest distance from an outer periphery of the region 43 on an inner side of the body portion 42 to the distal end of the protruding portion 44 is shorter than a shortest distance from an outer periphery of the shaft member 50 to an outer periphery of the base 10.

When the surface treatment member 1 is viewed along the imaginary axis A, the protruding portion 44 has an asymmetrical shape with respect to an imaginary line V that connects the center of the body portion 42 and a distal end of the protruding portion 44. In Fig. 3, only one imaginary line V is indicated. However, the technical feature "has an asymmetrical shape with respect to an imaginary line V that connects the center of the body portion 42 and a distal end of the protruding portion 44" is adopted by all protruding portions 44.

The shape, the forming material, physical properties and the like specific to the striking member 40 can be suitably determined depending on a usage of the surface treatment member 1. The striking member 40 in the embodiment 1 can be manufactured by applying working to a metal plate, for example. It is preferable that the hardness of the protruding portion 44 be 40 or more in Rockwell Hardness C-scale. It is preferable that the entirety of the striking member 40 have the hardness that falls within the above-mentioned hardness range. By imparting such hardness to the protruding portion 44, the surface treatment member 1 can form sufficient concaves and convexes also on a surface treatment object made of a steel material.

In viewing the surface treatment member 1 along the imaginary axis A, when the surface treatment member 1 is rotated, a portion of the striking member 40 is exposed outside from the outer periphery of the base 10 due to a centrifugal force (see Fig. 2) and, after the striking member 40 impinges on a surface treatment object, the entirety of the striking member 40 is retractable to the inside of an imaginary circle that passes the outermost periphery of the base 10 about the imaginary axis A. The outer periphery of the base 10 is formed in a circular shape about the imaginary axis A and hence, the entirety of the striking member 40 is retractable to the inside of the outer periphery of the base 10 after the striking member 40 impinges on the surface treatment object. Such retracting movement of the striking member 40 does not depend on the deformation (bending, elongation or the like) of the base 10 and the striking member 40. This operation is described in detail in a paragraph "Behavior of striking member 40 when substrate adjustment is performed by surface preparation system 100".

The shaft member 50 is a member having a rod shape that is disposed in the region 43 inside the body portion 42, and is fixed to the base 10. The shaft member 50 may be also referred to as a member that mounts the striking member 40 on the base 10.

### 2. Surface treatment system 100

Next, the surface treatment system 100 according to the embodiment 1 is described.

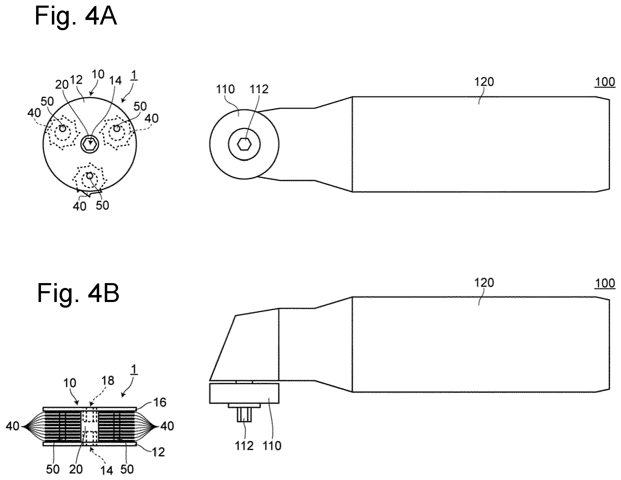

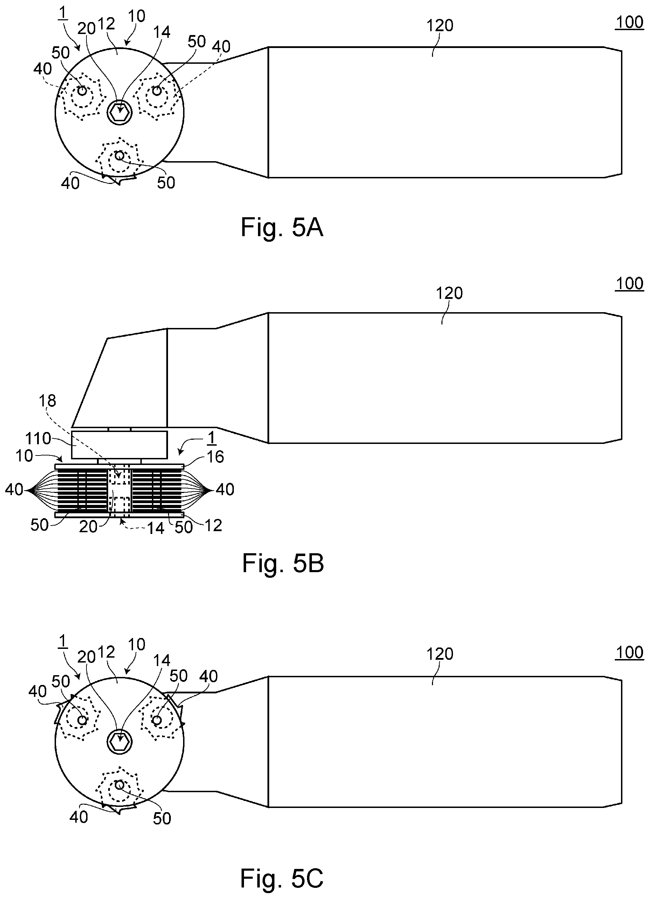

Fig. 4 and Fig. 5 are views for describing the surface treatment system 100 according to the embodiment 1. It may be safe to say that Fig. 4 is a view illustrating a state where the surface treatment member 1 is removed from the rotary member 110, and Fig. 4(a) is a front view, Fig. 4(b) is a plan view (top plan view). It is also safe to say that Fig. 5 is a view illustrating a state where the surface treatment member 1 is mounted on the rotary member 110. Fig. 5(a) is a front view illustrating a state where the surface treatment member 1 is disposed in a stationary state, Fig. 5(b) is a plan view (top plan view) of the surface treatment member 1 illustrated in Fig. 5(a), and Fig. 5(c) is a front view of the surface treatment member 1 illustrating a state where the surface treatment member 1 is rotated.

As illustrated in Fig. 4 and Fig. 5, the surface treatment system 100 according to the embodiment 1 includes the surface treatment member 1, the rotary member 110, and a grip portion 120. The surface treatment system 100 may be also referred to as a handy power tool surface treatment system 100 (rotary tool). The surface treatment system 100 includes other constitutional elements for rotational driving besides the above-mentioned constitutional elements. However, these other constitutional elements are known constitutional elements and hence, the description and the illustration of these constitutional elements are omitted. Further, the surface treatment system 100 may include constitutional elements that are not indispensable (for example, a cover that prevents scattering of dust and an auxiliary grip) besides the above-mentioned constitutional elements.

In this specification, "surface treatment system" means a combination of a device and members that can be used in performing the surface treatment. In this embodiment, the surface treatment system is not limited to a handy power tool such as the surface treatment system 100, and may include a robot, a drone or the like that can be operated by a remote control operation or an automatic control operation, for example. The usage of the surface treatment system according to the present invention is not limited to the surface preparation of an object to be coated. The surface treatment system according to the present invention can be also used for enhancing the surface treatment of a joining surface or the surface treatment for enhancing aesthetic appearance.

The surface treatment member 1 is mounted on the rotary member 110. In the surface treatment system 100, a mounting portion 112 (see Fig. 4) of the rotary member 110 is inserted into a mounting hole 18 of the surface treatment member 1 (base member 10). In the embodiment 1, a case is exemplified where the mounting portion 112 is formed of a hexagonal columnar member, and the mounting holes 14, 18 have a hexagonal columnar hole. The shape of the mounting portion and the shape of the mounting hole are not specifically limited provided that a rotational force of the rotary member can be transmitted to the surface treatment member. Further, the mounting portion and the mounting hole may have a structure or a mechanism (for example, a concavo-convex shape, a locking mechanism or the like) for preventing an unintended removal of the surface treatment member 1. Further, if the surface treatment member can be mounted on the rotary member, such a structure or a mechanism is not limited to a combination of the mounting portion and the mounting hole.

The rotary member 110 is a member that can be rotated by a drive means (not illustrated in the drawings). The rotary member 110 includes the mounting portion 112 having a shape corresponding to the mounting holes 14,18. To rotate the surface treatment member 1, the rotary member 110 is connected to the drive means that generates a rotating force by a suitable means (for example, gears, a belt, a shaft or the like). Although a type of the drive unit is not particularly limited, as an example, an electrically operated motor, a pressure motor (for example, a pneumatic pressure motor, a water pressure motor or a hydraulic pressure motor) or an internal combustion engine can be named.

The grip portion 120 is a portion that a user grips when the user uses the surface treatment system 100. The grip portion 120 may incorporate various mechanisms (for example, the entirety or a portion of the drive means, a transmission, a transformer and the like).

### 3. Behavior of striking member 40 in performing surface preparation by surface treatment system 100

Next, the behavior of the striking member 40 in performing surface preparation (at the time of actual use) is described.

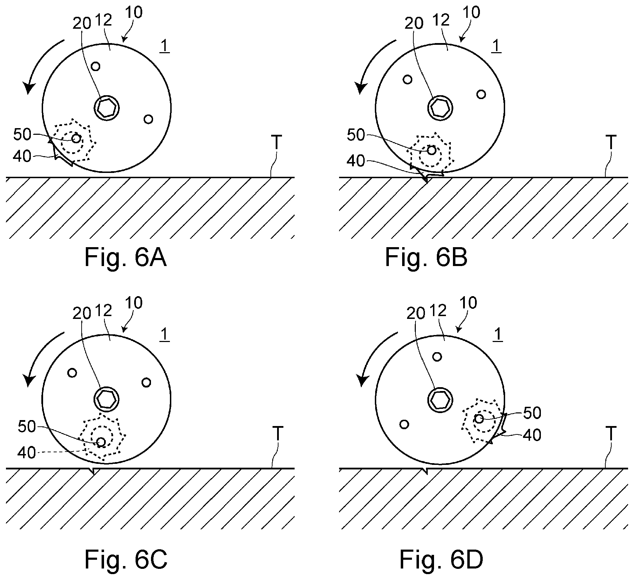

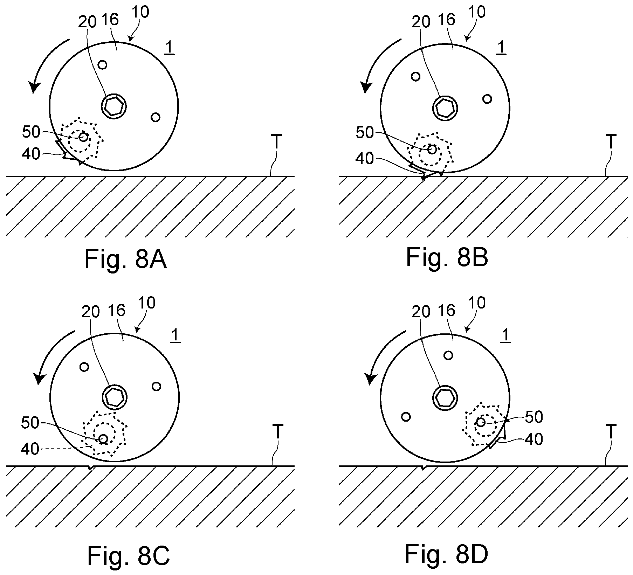

Fig. 6 is a view for describing the behavior of the striking member 40 in the surface treatment system 100 according to the embodiment 1. Fig. 6(a) to Fig. 6(d) are views illustrating the movement of the surface treatment member 1 and the movement of the striking member 40 with the lapse of time. In Fig. 6, to facilitate the understanding of the drawing, only one striking member 40 is illustrated with respect to the striking members 40, and the constitutional elements of the surface treatment system 100 other than the surface treatment member 1 are not illustrated in the drawing. In Fig. 6, an arrow indicated on a left side of the surface treatment member 1 in the drawing indicates a rotational direction of the surface treatment member 1 (the same manner of indication being adopted in Fig. 8 described later). In Fig. 6, the illustration of a foreign substance (an old coated film, a rust or the like) that may exist by a chance on a surface treatment object T is omitted (the illustration of a foreign matter being also omitted in Fig. 8 described later).

With respect to the striking member 40 that is mounted on the base 10 that is rotated together with the rotary member 110 by way of the shaft member 50, when the surface treatment member 1 is rotated, a portion of the striking member 40 is exposed outside from the outer periphery of the base 10 (see Fig. 6(a)) due to a centrifugal force. Due to the rotation of the base 10, the striking member 40 approaches and impinges on the surface treatment object T (see Fig. 6(b)). At this stage of the operation, a dot-shaped recess is formed on the surface treatment object T by the protruding portion 44 of the striking member 40. After impinging on the surface treatment object T, the striking member 40 is bounced back due to a reaction of the impingement. Since the region 43 disposed inside the annular striking member 40 is larger than the diameter of the shaft member 50, the entirety of the striking member 40 is retractable toward the inside the outer periphery of the base 10 (toward the inside the imaginary circle that passes over the outermost periphery of the base 10 about the imaginary axis A) (see Fig. 6(c)). In a state where the striking member 40 is retracted toward the inside the outer periphery of the base 10, the striking member 40 passes an area where the base 10 and the surface treatment object T approach closest to each other. Then, a portion of the striking member 40 is again exposed outside from the outer periphery of the base 10 due to a centrifugal force (see Fig. 6(d)).

There is a possibility that the striking member 40 is brought into contact with the surface treatment object T at a point of time that the striking member 40 passes the area where the base 10 and the surface treatment object T approach closest to each other. However, the striking member 40 has almost no energy at this point of time and hence, substantially no pattern having a scratch shape is formed on the surface treatment object T.

### 4. Surface treatment system 102.

Next, the surface treatment system 102 according to the embodiment 1 is described.

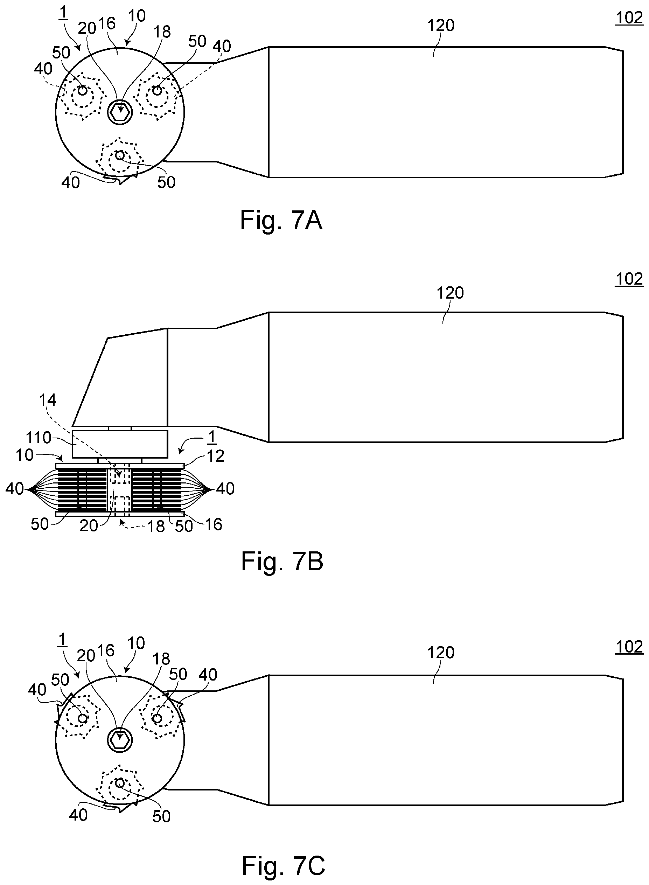

Fig. 7 is a view illustrating the surface treatment system 102 according to the embodiment 1. Fig. 7(a) is a front view illustrating a state where the surface treatment member 1 is disposed in a stationary state, Fig. 7(b) is a plan view (top plan view) of the surface treatment member 1 illustrated in Fig. 7(a), and Fig. 7(c) is a front view of the surface treatment member 1 illustrating a state where the surface treatment member 1 is rotated.

Fig. 8 is a view for describing the behavior of the striking member 40 in the surface treatment system 102 according to the embodiment 1. Fig. 8(a) to Fig. 8(d) are views illustrating the movement of the surface treatment member 1 and the movement of the striking member 40 with the lapse of time. In Fig. 8, to facilitate the understanding of the drawing, only one striking member 40 is illustrated with respect to the striking members 40, and the constitutional elements of the surface treatment system 102 other than the surface treatment member 1 are not illustrated in the drawing.

In the surface treatment system 100, the mounting portion 112 of the rotary member 110 is inserted into the mounting hole 18 formed in the surface treatment member 1 (base 10). The surface treatment member 1 can be also mounted in an opposite direction. A system where a surface treatment member 1 (a base 10) is mounted on a rotary member 110 by inserting a mounting portion 112 of the rotary member 110 into a mounting hole 14 formed in the surface treatment member 1 as illustrated in Fig. 7 is described as the surface treatment system 102.

In the surface treatment system 102, as illustrated in Fig. 7 and Fig. 8, the surface treatment system 102 differs from the surface treatment system 100 with respect to the direction that the surface treatment member 1 is mounted on the rotary member 110 and hence, in the surface treatment system 102, the rotational direction of the surface treatment member 1 becomes opposite to the rotational direction of the surface treatment member 1 in the surface treatment system 100. The behavior of the striking member 40 when using in the surface treatment system 102 is, as a whole, substantially equal to the behavior of the striking member 40 when using in the surface treatment system 100 (see Fig. 8). On the other hand, a protruding portion 44 of the striking member 40 has an asymmetrical shape with respect to an imaginary line V that connects the center of a body portion 42 and a distal end of the protruding portion 44 (see Fig. 3(a)). Accordingly, the direction that the protruding portion 44 impinges on the surface treatment object differs between the case of the surface treatment system 100 and the case of the surface treatment system 102. As a result, the shape and the depth of the dot-shaped recess formed on the surface treatment object differ between the case of the surface treatment system 100 and the case of the surface treatment system 102.

### 5. Advantageous effects

Hereinafter, the advantageous effects acquired by the surface treatment member 1, the surface treatment system 100 and the surface treatment system 102 according to the embodiment 1 are described.

The surface treatment member 1 according to the embodiment 1 includes: the base 10 that is mounted on the rotary member 110; the striking members 40 each having the annular body portion 42 and the protruding portions 44 that protrude from the body portion 42 and imparting an impact on the surface treatment object by impinging on the surface treatment object when using; and the shaft members 50 each being disposed in the region 43 inside the body portion 42 and being fixed to the base 10. In a case where the surface treatment member 1 is viewed along the imaginary axis A about which the base 10 is rotated, a portion of the striking member 40 is exposed outside from the outer periphery of the base 10 in a state where the surface treatment member 1 is rotated due to a centrifugal force, and the entirety of the striking member 40 is retractable toward the inside the imaginary circle that passes the outermost periphery of the base 10 about the imaginary axis A after the striking member 40 impinges on the surface treatment object. With such a configuration, by performing the surface preparation using the surface treatment system 100 that includes the surface treatment member 1 according to the present invention, the striking member 40 speedily retracts after impinging on the surface treatment object and hence, concaves and convexes having a dot shape are formed on the surface treatment object without forming patterns having a scratch shape. As a result, according to the surface treatment member 1 of the embodiment 1, by using the surface treatment member 1 as a part of the surface treatment system 100, it is possible to increase adhesiveness of a paint when the surface preparation is performed. Further, according to the surface treatment member 1 of the embodiment 1, by using the surface treatment member 1 as a part of the surface treatment system 100, the surface treatment system 100 can be used with the same feeling as a conventional rotary tool and hence, the surface preparation can be performed easily.

Further, according to the surface treatment member 1 of the embodiment 1, a portion of the striking member 40 is exposed outside from the outer periphery of the base 10 due to a centrifugal force when the surface treatment member 1 is rotated, and entirety of the striking member 40 is retractable toward the inside the imaginary circle that passes over the outermost periphery of the base 10 about the imaginary axis A after impinging on the surface treatment object. Accordingly, compared to a surface treatment member where the retracting movement of a striking member depends on the deformation of a base or a striking member (for example, an annular brush described in patent literature 2), a repulsive force that is generated when the surface preparation is performed can be reduced and hence, it is possible to reduce a force necessary for holding the surface treatment system 100 at an appropriate position.

In performing the surface preparation, a case is considered where the surface treatment object and the base 10 of the surface treatment member 1 approach to each other to an extent that these members are almost brought into contact with each other or these members are actually brought into contact with each other. According to the surface treatment member 1 according to the embodiment 1, the entirety of the striking member 40 is retractable toward the inside the imaginary circle that passes over the outermost periphery of the base 10 about the imaginary axis A. As a result, it is possible to suppress the formation of a pattern having a scratch shape and to suppress the breaking of a member that forms the surface treatment member 1.

Further, according to the surface treatment member 1 of the embodiment 1, the retracting movement of the striking member 40 can be realized by the simple combination of the striking member 40 having the annular body portion 42 and the shaft member 50 disposed in the region 43 inside the body portion 42.

Further, according to the surface treatment member 1 of the embodiment 1, the outer periphery of the base 10 is formed in a circular shape about the imaginary axis A, and the entirety of the striking member 40 is retractable after the striking member 40 impinges on the surface treatment object. As a result, it is possible to further suppress the formation of a pattern having a scratch shape and to further suppress the breaking of a member that forms the surface treatment member 1.

Further, according to the surface treatment member 1 of the embodiment 1, the striking member 40 includes a plurality of protruding portions 44, and the protruding portions 44 are arranged on the outer periphery of the body portion 42 at an equal interval. Accordingly, it is possible to suppress the occurrence of a phenomenon that the protruding portions 44 that impinge on the surface treatment object becomes at random so that the specific protruding portions 44 are non-uniformly worn or damaged. As a result, product life can be prolonged.

Further, according to the surface treatment member 1 of the embodiment 1, when the surface treatment member 1 is viewed along the imaginary axis A, the protruding portion 44 has an asymmetrical shape with respect to the imaginary line V that connects the center of the body portion 42 and the distal end of the protruding portion 44. Accordingly, by changing the rotational direction of the surface treatment member 1, it is possible to change the shape and the depth of the concaves and convexes having a dot shape that are formed on the surface treatment object.

The surface treatment systems 100, 102 according to the embodiment 1 each include the surface treatment member 1 according to the embodiment 1 and hence, it is possible to provide the surface treatment system where the adhesiveness of a paint can be increased, and surface preparation can be performed easily.

### [Embodiment 2]

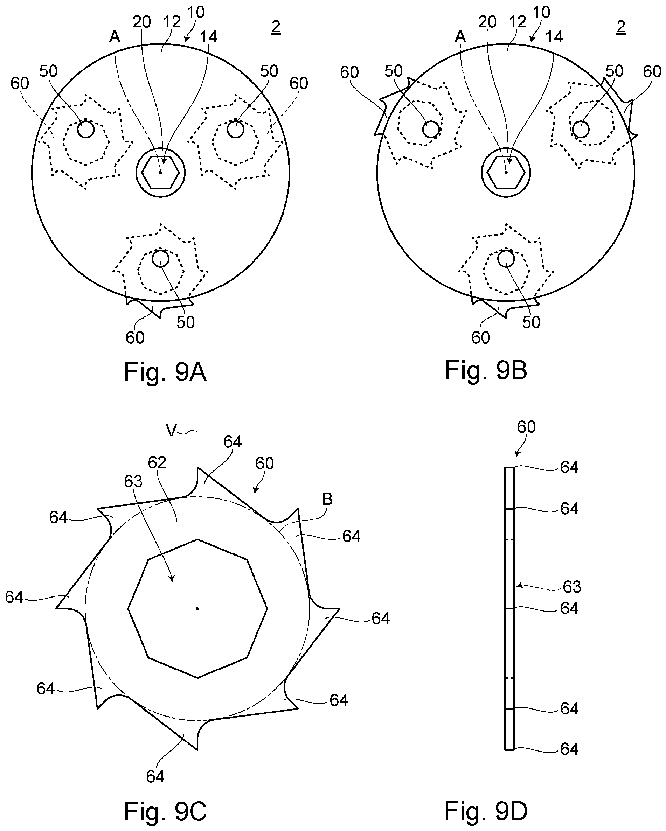

Fig. 9 is a view illustrating a surface treatment member 2 according to the embodiment 2. Fig 9(a) is a front view of the surface treatment member 2 when the surface treatment member 2 is not used (in a stationary state), Fig. 9(b) is the front view of the surface treatment member 2 when the surface treatment member 2 is in use (in a rotational state), Fig.9(c) is a front view of a striking member 60. Fig. 9(b) is a right side view of the surface treatment member 2 illustrated in Fig. 9(a). In Fig. 9 (c) and Fig. 9(d), the surface treatment member 2 is illustrated in an enlarged manner compared to Fig. 9(a) and Fig. 9(b).

The surface treatment member 2 according to the embodiment 2 has substantially the same configuration as the surface treatment member 1 according to the embodiment 1. However, the surface treatment member 2 differs from the surface treatment member 1 with respect to the shape of the striking member. That is, as illustrated in Fig. 9, the surface treatment member 2 according to the embodiment 2 includes the striking members 60 where an inner periphery of a body portion 62 is formed in a regular polygonal shape that corresponds to the number of protruding portions 64. It may be safe to say that a region 63 on an inner side is formed in a regular polygonal shape. The inner periphery of the body portion 62 in the striking member 60 is formed in a rectangular octagonal shape corresponding to the number (eight pieces) of the protruding portions 64. It may be safe to say that the shape of the inner periphery of the body portion 62 is the shape of an outer periphery of the region 63 (through hole) on the inner side.

The striking member 60 is substantially equal to the striking member 40 according to the embodiment 1 with respect to a point that a portion of the striking member 60 is exposed outside from an outer periphery of a base 10 due to a centrifugal force when the surface treatment member 1 is rotated. On the other hand, with respect to the striking member 60, the inner periphery of the body portion 62 is formed in a rectangular polygonal shape and hence, a shaft member 50 is likely to stay near corners of the rectangular polygonal shape when the surface treatment member 1 is being rotated (see Fig. 9(b)). As a result, when the surface treatment member 1 is rotated, it is possible to easily direct the protruding portion 64 in a specific direction.

The surface treatment member 2 according to the embodiment 2 differs from the surface treatment member 1 according to the embodiment 1 with respect to the shape of the striking member. However, in the surface treatment member 2 according to the embodiment 2, a portion of the striking member 60 is exposed outside from the outer periphery of the base 10 due to a centrifugal force when the surface treatment member 2 is rotated, and entirety of the striking member 60 is retractable toward the inside the imaginary circle that passes over the outermost periphery of the base 10 about the imaginary axis A after impinging on the surface treatment object. Accordingly, in the same manner as the surface treatment member 1 according to the embodiment 1, with the use of the surface treatment system that includes the rotary member, it is possible to provide the surface treatment member that can increase the adhesiveness of a paint when the surface preparation is performed, and can easily perform the surface preparation.

Further, according to the surface treatment member 2 of the embodiment 2, the inner periphery of the body portion 62 is formed in a rectangular polygonal shape that corresponds to the number of the protruding portions 64. Accordingly, when the surface treatment member 1 is rotated, it is possible to easily direct the protruding portion 64 in a specific direction. As a result, uniformity in a depth and a size with respect to recesses formed on a surface treatment object can be increased.

The surface treatment member 2 according to the embodiment 2 also acquires advantageous effects that are substantially equal to the advantageous effects that the surface treatment member 1 according to the embodiment 1 described in the embodiment 1 possesses.

### [Embodiment 3]

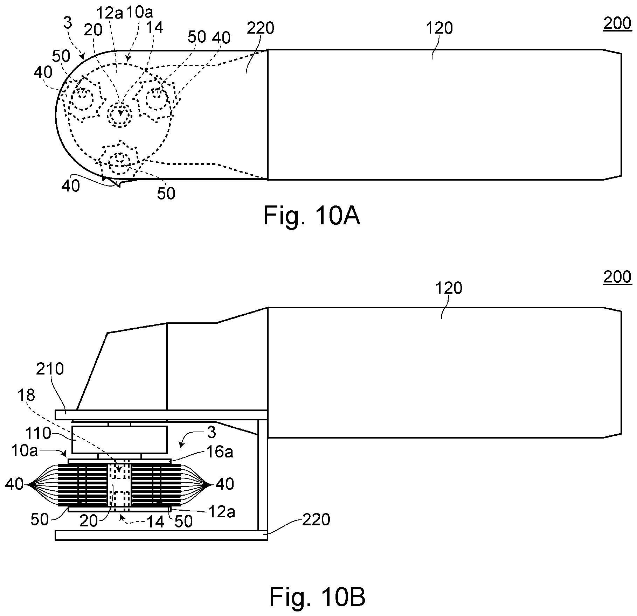

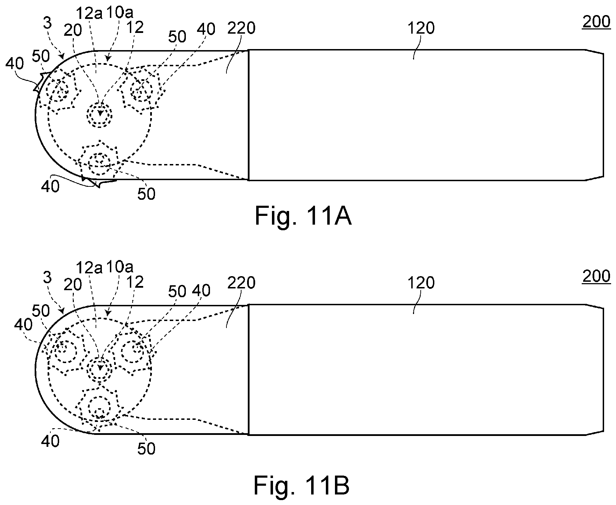

Fig. 10 and Fig. 11 are views illustrating a surface treatment system 200 according to the embodiment 3. Fig. 10 (a) is a front view of the surface treatment system 200 where a surface treatment member 3 is in a stationary state, and Fig. 10 (b) is a plan view (a top plan view) of the surface treatment system 200 illustrated in Fig. 10(a). Fig. 11(a) is a front view of the surface treatment system 200 in a state where the surface treatment member 3 is rotated, and Fig. 11(b) is a front view illustrating a state where all striking members 40 are retracted toward the inside an outer periphery of a guide member 220.

As illustrated in Fig. 10 and Fig. 11, the surface treatment system 200 according to the embodiment 3 includes a surface treatment member 3, a rotary member 110, a grip portion 120, and guide members 210, 220. Among these constitutional elements, the rotary member 110 and the grip portion 120 are substantially equal to the rotary member 110 and the grip portion 120 in the surface treatment system 100 according to the embodiment 1. Hereinafter, the surface treatment system 200 according to the embodiment 3 is described by focusing on the difference between the surface treatment system 200 according to the embodiment 3 and the surface treatment system 100 according to the embodiment 1.

The surface treatment member 3 is mounted on the rotary member 110. The surface treatment member 3 includes: a base 10a that is mounted on the rotary member; striking members 40 each having an annular body portion and protruding portions protruding from the body portion and imparting an impact to a surface treatment object by impinging on the surface treatment object when using; and having a shaft member 50 disposed in a region inside the body portion and fixed to the base 10a. Among these constitutional elements, the striking member 40 and the shaft member 50 are substantially equal to the striking member 40 and the shaft member 50 in the embodiment 1.

The base 10a includes a first circular member 12a, a second circular member 16a, and a shaft member 20. A mounting hole 14 is formed in a first circular member 12a side of the base 10a, and a mounting hole 18 is formed in a second circular member 16a side of the base 10a. When the base 10a is viewed along a rotary axis of the rotary member 110, an outer periphery of the base 10a is formed in a circular shape about the rotary axis. However, the outer periphery of the base 10a has a diameter smaller than a diameter of the base 10 according to the embodiment 1. With such a configuration, when only the surface treatment member 3 is viewed, the entirety of the striking member 40 cannot retract to the inside of an imaginary circle (an outer periphery of the base 10a) that passes over an outermost periphery of the base 10 about an imaginary axis A after the striking member 40 impinges on the surface treatment object (see Fig. 11(b)) .

Although the surface treatment member 3 is mounted on the rotary member 110 at the mounting hole 18 (the second circular member 16 side), the surface treatment member 3 may be mounted on the rotary member 110 at the mounting hole 14 (the first circular member 12 side) in the same manner as the surface treatment member 1 according to the embodiment 1.

The guide members 210, 220 are members that expand more toward a surface treatment object side than the base 10a when using. The guide members 210, 220 are disposed in a state where the surface treatment member 3 is interposed between the guide members 210, 220 (Fig. 10(b)). From a viewpoint of easiness in an operation at the time of removing or mounting the surface treatment member 3, it is preferable that the guide members 220 are detachably mounted.

In the surface treatment system 200 according to the embodiment 3, as viewed along the rotational axis of the rotary member 110, a portion of the striking member 40 is exposed outside outer peripheries of the guide members 210, 220 due to a centrifugal force when the surface treatment member 3 is rotated (see Fig. 11(a)), and the entirety of the striking member 40 is retractable inside the outer peripheries of the guide members 210, 220 after the striking member 40 impinges on the surface treatment object (see Fig. 11(b)).

The surface treatment system 200 according to the embodiment 3 is the surface treatment system that includes: the rotary member 110 that is rotatably by a drive means; and the surface treatment member 3 that is mounted on the rotary member 110. The surface treatment member 3 includes: the base 10a that is mounted on the rotary member 110; the striking members 40 each having the annular body portion 42 and the protruding portions 44 that protrude from the body portion 42 and imparting an impact on the surface treatment object by impinging on the surface treatment object when using; and the shaft members 50 each being disposed in the region 43 inside the body portion 42 and being fixed to the base 10a. The surface treatment system 200 further includes the guide members 210, 220 that expand toward the surface treatment object side from the base 10a when using. In a case where the surface treatment member 3 is viewed along the rotational axis of the rotary member 110, a portion of the striking member 40 is exposed outside from the outer peripheries of the guide members 210, 220 in a state where the surface treatment member is rotated due to a centrifugal force, and the entirety of the striking member 40 is retractable toward the inside the outer peripheries of the guide members 210, 220 after the striking member 40 impinges on the surface treatment object. With such a configuration, by performing the surface preparation using the surface treatment system 200 according to the embodiment 3, the striking member 40 speedily retracts after impinging on the surface treatment object and hence, concaves and convexes having a dot shape are formed on the surface treatment object without forming patterns having a scratch shape. As a result, according to the surface treatment system 200 of the embodiment 3, it is possible to increase adhesiveness of a paint when the surface preparation is performed. Further, according to the surface treatment system 200 of the embodiment 3, the surface treatment system 200 can be used with the same feeling as a conventional rotary tool and hence, the surface preparation can be performed easily.

### [Embodiment 4]

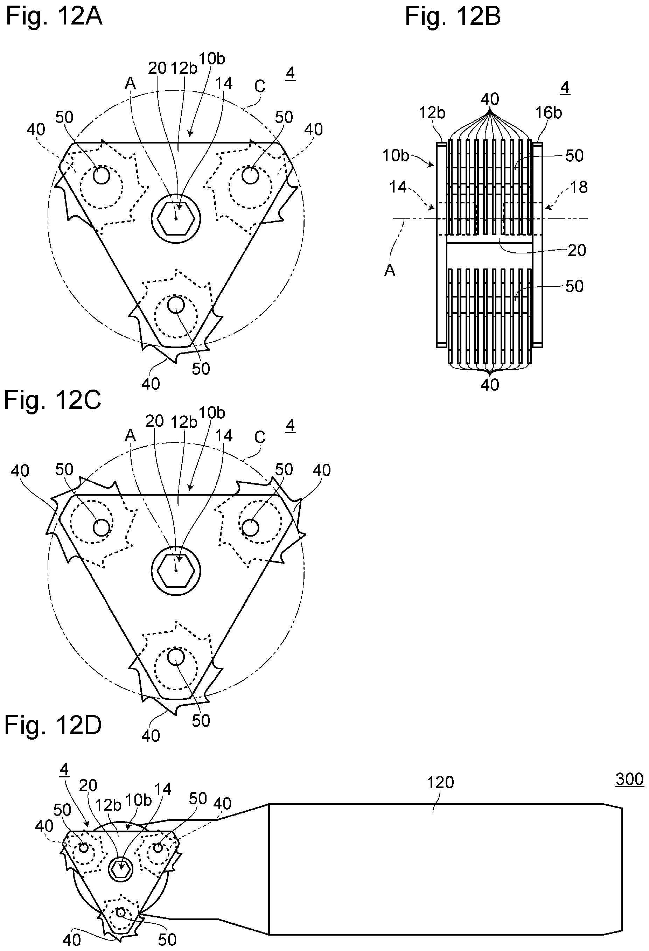

Fig. 12 is a view illustrating a surface treatment member 4 and a surface treatment system 300 according to the embodiment 4. Fig. 12 (a) is a front view of the surface treatment member 4 where the surface treatment member 4 is not used (in a stationary state), Fig. 12(b) is a right side view of the surface treatment member 4 illustrated in Fig. 12(a), Fig. 12 (c) is a front view of the surface treatment member 4 where the surface treatment member 4 is being used (in a rotating state), and Fig. 12(d) is a front view of the surface treatment system 300.

The surface treatment member 4 and the surface treatment system 300 according to the embodiment 4 basically have substantially the same configuration as the surface treatment member 1 and the surface treatment system 100 according to the embodiment 1. However, the surface treatment member 4 and the surface treatment system 300 according to the embodiment 4 differs from the surface treatment member 1 and the surface treatment system 100 according to the embodiment 1 with respect to the shape of the base. In the surface treatment member 4 and the surface treatment system 300 according to the embodiment 4, when the surface treatment member 4 is viewed along an imaginary axis A, the shape of a base 10b is not formed in a circular shape about the imaginary axis A. As illustrated in Fig. 12, when the surface treatment member 4 is viewed along an imaginary axis A, the base 10b is formed in an approximately triangular shape. The base 10b of the surface treatment member 4 include a first base member 12b, a second base member 16b, and a shaft member 20.

With respect to the point that the entirety of a striking member 40 is retractable to the inside an imaginary circle C that passes over an outermost periphery of the base 10b about the imaginary axis A after impinging on a surface treatment object, the surface treatment member 4 and the surface treatment system 300 according to the embodiment 4 and the surface treatment member 1 and the surface treatment system 100 according to the embodiment 1 share the same configuration.

The surface treatment member 4 according to the embodiment 4 differs from the surface treatment member 1 according to the embodiment 1 in the shape of the base. However, a portion of the striking member 40 is exposed outside from the outer periphery of the base 10b due to a centrifugal force when the surface treatment member 4 is rotated, and after the striking member 40 impinges on a surface treatment object, the entirety of the striking member 40 is retractable to the inside of the imaginary circle C that passes the outermost periphery of the base 10b about the imaginary axis A. Accordingly, in the same manner as the surface treatment member 1 according to the embodiment 1, with the use of the surface treatment system that includes the rotary member, it is possible to provide the surface treatment member that can increase the adhesiveness of a paint when the surface preparation is performed, and can easily perform the surface preparation.

The surface treatment system 300 according to the embodiment 4 includes the surface treatment member 4 according to the embodiment 4 and hence, in the same manner as the surface treatment system 100 according to the embodiment 1, it is possible to provide the surface treatment system where the adhesiveness of a paint can be increased and the surface preparation can be performed easily.

The surface treatment member 4 and the surface treatment system 300 according to the embodiment 4 also acquire substantially the same advantageous effects that the surface treatment member 1 and the surface treatment system 100 according to the embodiment 1 acquire (excluding the advantageous effect derived from "when the surface treatment member 1 is viewed along the imaginary axis A, the shape of the base 10 is formed in a circular shape about the imaginary axis A").

As has been described heretofore, the present invention has been made based on the above-mentioned respective embodiments. However, the present invention is not limited to the above-mentioned respective embodiments. The present invention can be carried out in various modes without departing from the gist of the present invention. For example, the following modifications are conceivable.

(1) The shapes, the numbers, the positions and the like of the constitutional elements described in the above-mentioned respective embodiments are provided for an exemplifying purpose, and can be modified within a scope that advantageous effects of the present invention are not jeopardized.
(2) Fig. 13 is a view illustrating a surface treatment member 5 according to a modification. Fig. 13 (a) is a front view of the surface treatment member 5 where the surface treatment member 5 is not used (in a stationary state), Fig. 13(b) is a right side view of the surface treatment member 5 illustrated in Fig. 13(a), Fig. 13 (c) is a view of the surface treatment member 5 where striking members 70 are not illustrated from the configuration illustrated in Fig. 13 (b), Fig. 13 (d) is a front view of the surface treatment member 4 where the surface treatment member 4 is used (in a rotating state), Fig. 13 (e) is a front view of the striking member 70, and Fig. 13 (f) is a right side view of the striking member 70 illustrated in Fig. 13 (e). In Fig. 13 (e) and Fig. 13 (f), the striking member 70 is illustrated in an enlarged manner compared to Fig 13(a) to Fig 13(d). In Fig. 13 (b), since the number of striking members 70 illustrated in the drawing is large, the symbol is given to only some striking members 70. Further, in Fig. 13 (e) and Fig. 13 (f), since the number of protruding portions 74 illustrated in the drawing is large, the symbol is given to only one protruding portion 74.
   For example, the present invention also includes the surface treatment member 5 illustrated in Fig. 13 as the surface treatment member according to the present invention. The surface treatment member 5 according to the modification includes a base 10c, the striking members 70, and five shaft members 50. When the surface treatment member 5 is viewed along an imaginary axis A, the shape of the base 10c (a first base member 12c and a second base member 16c) is formed in an approximately pentagonal shape. As illustrated in Fig. 13 (e) and Fig. 13 (f), the striking member 70 includes an annular body portion 72 and protruding portions 74 that protrude from the body portion 72. A region 73 (through hole) is formed in the body portion 72 on an inner side. In the surface treatment member 5 according to the modification, 20 pieces of striking members 70 are mounted in a row along the direction that follows an imaginary axis A (see Fig. 13 (b)). Further, using these 20 pieces of striking members 70 as 1 set, the surface treatment member 5 includes 5 sets of striking members 70.
(3) The shapes of the striking members 40, 60 described in the respective embodiments are provided for an exemplifying purpose, and the present invention is not limited to such shapes. For example, although the striking members 40, 60 in the above-mentioned embodiments each have 8 pieces of protruding portions 44, 46, the present invention is not limited to such striking members. The number of protruding portions that the striking member includes may be 7 pieces or less, or may be 9 pieces or more as illustrated in Fig. 13.
(4) In the above-mentioned respective embodiments, the protruding portions 44, 46 are formed in an asymmetrical shape with respect to the imaginary axis V that connects the center of the body portion 42, 62 and the distal end of the protruding portion 44, 64. However, the present invention is not limited to such a configuration. The protruding portion may be formed in a symmetrical shape with respect to the imaginary line that connects the center of the body portion and the distal end of the protruding portion as illustrated in Fig. 13.
(5) The surface treatment member according to the present invention may further include a position adjustment member (a spacer or the like) for preventing a contact between the striking members disposed adjacently to each other.

### Industrial Applicability

The surface treatment members and the surface treatment systems according to the present invention can be suitably used in various applications relating to the surface treatment.

### Reference signs list

1, 2, 3, 4, 5: surface treatment member
10, 10a, 10b, 10c: base
12, 12a: first circular member
12b, 12c: first base member
14, 18: mounting hole
16, 16a: second circular member
16b, 16c: second base member
20: shaft member
40, 60, 70: striking member
42, 62, 72: body portion
43, 63, 73: region on an inner side
44, 64, 74: protruding portion
50: shaft member
100, 102, 200, 300: surface treatment system
110: rotary member
112: mounting portion
120: grip portion
210, 220: guide member
A: imaginary axis
B: boundary between body portion and protruding portion
C: imaginary circle that passes over outermost periphery of base about imaginary axis
T: surface treatment object
V: imaginary line

## Claims

1. A surface treatment member used by being mounted on a rotary member in a surface treatment system including the rotary member, the surface treatment member comprising:
a base being rotatably mountable on the rotary member;
a striking member having an annular body portion and a protruding portion that protrudes from the body portion, the striking member configured to impinge on a surface treatment object and to impart an impact to the surface treatment object when using; and
a shaft member disposed in a region on an inner side of the body portion, and being fixed to the base, wherein
when the surface treatment member is viewed along an imaginary axis about which the base is to be rotated,
a portion of the striking member is configured to be exposed outside an outer periphery of the base by a centrifugal force when the surface treatment member is rotated, and an entirety of the striking member is retractable toward inside an imaginary circle that passes over an outermost periphery of the base about the imaginary axis after the striking member impinges on the surface treatment object.

2. The surface treatment member according to claim 1, wherein, when the surface treatment member is viewed along the imaginary axis,
the outer periphery of the base is formed in a circular shape about the imaginary axis, and
an entirety of the striking member is retractable toward inside the outer periphery of the base after the striking member impinges on the surface treatment object.

3. The surface treatment member according to claim 1 or 2, wherein
the striking member includes a plurality of the protruding portions, and
the protruding portions are disposed at an equal interval on an outer periphery of the body portion.

4. The surface treatment member according to claim 3, wherein
an inner periphery of the body portion is formed in a regular polygonal shape that corresponds to the number of protruding portions.

5. The surface treatment member according to any one of claims 1 to 4, wherein when the surface treatment member is viewed along the imaginary axis, the protruding portion is formed in an asymmetrical shape with respect to an imaginary line that connects a center of the body portion and a distal end of the protruding portion.

6. A surface treatment system comprising: a rotary member that is rotatable by a drive means; and a surface treatment member that is mounted on the rotary member, wherein
the surface treatment member includes:
a base being rotatably mountable on the rotary member;
a striking member having an annular body portion and a protruding portion that protrudes from the body portion, the striking member configured to impinge on a surface treatment object and to impart an impact to the surface treatment object when using; and
a shaft member disposed in a region on an inner side of the body portion, and being fixed to the base, wherein
when the surface treatment member is viewed along a rotary axis of the rotary member,
a portion of the striking member is configured to be exposed outside of an outer periphery of the base by a centrifugal force when the surface treatment member is rotated, and an entirety of the striking member is retractable toward inside an imaginary circle that passes over an outermost periphery of the base about the imaginary axis after the striking member impinges on the surface treatment object.

7. A surface treatment system comprising: a rotary member that is rotatable by a drive means; and a surface treatment member that is mounted on the rotary member, wherein
the surface treatment member includes:
a base being rotatably mountable on the rotary member;
a striking member having an annular body portion and a protruding portion that protrudes from the body portion, the striking member configured to impinge on a surface treatment object and to impart an impact to the surface treatment object when using; and
a shaft member disposed in a region on an inner side of the body portion, and being fixed to the base, wherein
the surface treatment system further comprises a guide member that expands toward a surface treatment object side from the base when using, and
when the surface treatment member is viewed along a rotary axis of the rotary member,
a portion of the striking member is configured to be exposed outside an outer periphery of the guide member by a centrifugal force when the surface treatment member is rotated, and an entirety of the striking member is retractable toward inside the outer periphery of the guide member after the striking member impinges on the surface treatment object.
